(19) Europäisches Patentamt
European Patent Office
Office européen des brevets

(11) Publication number: **0 014 463**
**B1**

(12) **EUROPEAN PATENT SPECIFICATION**

(45) Date of publication of patent specification: **29.06.83**

(51) Int. Cl.³: **C 08 L 23/00, C 08 K 3/32, C 08 K 5/34**

(21) Application number: **80100579.4**

(22) Date of filing: **05.02.80**

(54) **Self-extinguishing polyolefin compositions having an improved resistance to heat and to thermooxydation.**

(30) Priority: **05.02.79 IT 1988579**

(43) Date of publication of application:
**20.08.80 Bulletin 80/17**

(45) Publication of the grant of the patent:
**29.06.83 Bulletin 83/26**

(84) Designated Contracting States:
**AT BE CH DE FR GB NL**

(56) References cited:
**DE - A - 2 654 120**
**DE - A - 2 723 877**

(73) Proprietor: **Montedison S.p.A.**
**Patents & Licensing Dept. Foro Buonaparte, 31**
**P.O. Box 10528**
**I-20121 Milan (IT)**

(72) Inventor: **Bertelli, Guido**
**56 Via Rosa Angelini**
**Ferrara (IT)**
Inventor: **Roma, Pierpaolo**
**301 Via Bologna**
**Ferrara (IT)**
Inventor: **Locatelli, Renato, Dr.**
**11 Via A. Meucci**
**Ferrara (IT)**

(74) Representative: **Zumstein, Fritz sen., Dr. et al,**
**Dr. F. Zumstein sen. Dr. E. Assmann Dr. R. Koenigsberger Dipl.-Ing. F. Klingseisen Dr. F. Zumstein jun. Bräuhausstrasse 4**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 014 463 B1

Courier Press, Leamington Spa, England

# Self-extinguishing polyolefin compositions having an improved resistance to heat and to thermo-oxidation

The present invention concerns self-extinguishing polymeric compositions based on olefin homo- or copolymers such as polypropylene, polyethylene or ethylene-propylene copolymers.

The Prior Art describes several different processes for making the polymers incombustible: the less recent ones of such processes are in general based on the use of metal compounds, especially of antimony, in combination with thermally unstable halogenated compounds, such as for instance chlorinated paraffin waxes, as disclosed for instance in French patent no. 1,478,925 and in U.S. Patent no. 3,883,481.

The Combinations of metal compound + halogenated compound give results that are satisfactory as far as the self-extinguishing properties they confer to the polymers are concerned, but they show serious drawbacks: corrosion phenomena in the equipment in which is carried out the processing of the materials, and a heavy emission of toxic smokes and gases in case of a fire. Moreover, acceptable levels of self-extinguishing properties are only attained by using high concentrations of such combinations.

More recently, research was directed to the use of combinations comprising an ammonium or an amine phosphate, or another phosphorus compound, and one or more nitrogen containing organic compounds, such as for instance: melamine, dicyandiamine or aminoplast resins.

Such combinations do not show the above described drawbacks, but the polymeric compositions that contain them in general have poor heat and thermo-oxidation resistance. In particular, in DE—OS—2723877 there are disclosed self-extinguishing polyolefin compositions containing, as additives to this aim, reaction products of formaldehyde with a compound containing >NH, >CO and/or >CS groups, inserted in a cyclic structure. These compositions have high self-extinguishing characteristics, but reveal to be not completely satisfactory as regards their thermal stability when dealt with in particular heat processing steps.

The Applicant has now surprisingly found particular phosphorus and nitrogen containing anti-flame additives which, besides conferring high levels of self-extinguishing properties to the polyolefins to which they are added, do not have the disadvantage of a poor resistance to heat and to thermo-oxidation.

The compositions which are the object of the present invention contain for 100 parts by weight of composition:

(1) from 5 to 30 parts by weight of an ammonium phosphate; and

(2) from 3 to 20 parts by weight of one or more nitrogen containing compounds selected from: (a) benzyl-guanamine; (b) reaction products of aldehydes with guanamines of formula:

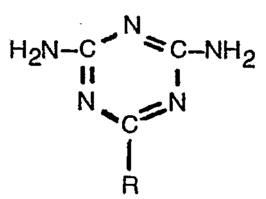

wherein R = phenyl or benzyl; (c) reaction products of aldehydes with two nitrogen containing compunds: one having formula

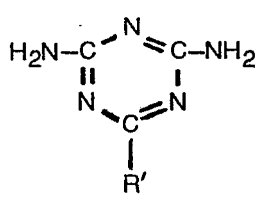

wherein R′ = H, $NH_2$, phenyl or benzyl, and the other one being a compound containing a functional group >NH and further the functional groups >C=O and/or >C=S, all inserted in a cyclic structure; the molar ratio of the two nitrogen containing compounds present in (c) ranging from 4:1 to 1:4.

Amongst the various stable phosphates, there are preferred the ammonium polyphosphates which fall under the general formula $(HN_4)_{n+2}P_nO_{3n+1}$ wherein n represents an integer equal to or greater than 2; the molecular weight of the polyphosphates should be preferably sufficiently high to ensure a low solubility in water.

The composition of the polyphosphates of the above indicated formula, in which n is a number sufficiently great, is practically the one corresponding to the formula of the metaphosphates $(NH_4PO_3)_n$.

An example of such polyphosphates is that known under the trade name of "Exolit 263" (produced and sold by Benckiser Knapsack GmbH) and having the composition $(NH_4PO_3)_n$ in which n is

greater than 50; another example is the product known under the trade mark "Phos-Check P/30" (produced by Monsanto Chemical Co.) and having the same composition.

Representative examples of the compounds cited in (2), containng the functions >C = O and/or >C = S and >NH inserted in a cyclic structure, are: ethylene-urea, ethylene-thiourea, hydantoin, hexahydropyrimidine-2-one, piperazine-3,6-dione, barbituric acid and uric acid.

The preferred aldehyde is formaldehyde which may be used according to any ratio of nitrogen containing compound/$CH_2O$ capable of yielding cross-linked products.

Amongst the reaction products (c) cited in (2), very interesting for their facility of preparation and anti-flame effectiveness, proved to be the products that are obtained when reacting a methylol-derivative of melamine with the compounds containing the functions >C = O and/or >C = S and >NH inserted in a cyclic structure. In such methylol-derivatives of melamine the molar ratio melamine/$CH_2O$ may range from 1:1 to 1:6, they are prepared by condensation of formaldehyde in an aqueous solution with melamine at 80°—100° and at a pH comprised between 9 and 10.

An example of a methylol-derivative of melamine is the product known under the trade name of "Lamelite C" (produced and sold by Montedison S.p.A.).

To prepare "Lamelite C" a 36% by weight/volume aqueous solution of formaldehyde is introduced into an autoclave, and brought to a pH of about 9 with an aqueous solution of NaOH at 30% by weight; the solution is then heated to 70°C, added with melamine in such a quantity as to bring the molar ratio formaldehyde/melamine to the value of 2.5/1 and the condensation is carried out at 90°C and at a pH comprised between 9.4 and 9.9, until the addition of water to the solution at 20°C, in an amount corresponding to a volume ratio of water to resin of about 1.25 to 1, causes cloudiness.

Thereupon the autoclave is cooled down and there are added: an aqueous solution of NaOH at 30% concentration until bringing the pH to a value comprised between 9.8 and 10.2, and deionized water in such a quantity as to bring the content of dry solid product to about 50%.

The syrup thus obtained is filtered, cooled down to about 20°C and finally spray-dried.

To prepare the reaction products (b), cited in (2), it is operated in the following way:

1 mole of phenyl-guanamine (benzoguanamine) or of benzylguanamine (phenylaceto-guanamine) is dissolved under heat in an aqueous solution of formaldehyde at 15% by weight/volume (4 moles), and the solution thus obtained is brought to a pH of 9—10 with an aqueous solution of NaOH and thereafter slowly dripped into water acidified with $H_2SO_4$ (pH = 1) maintained at 70—80°C under vigorous stirring: a finely subdivided white product precipitates.

It is neutralized with an aqueous solution of $NaHCO_3$, filtered, dried, ground, repeatedly washed with water and then again dried.

The preparation of the reaction products (c), cited in (2), is achieved in an analogous way. For instance:

(A) 1 mole of phenyl-guanamine and 2 moles of ethylene-urea are dissolved in a solution of formaldehyde at 15% by weight/volume (4 moles). The solution thus obtained is brought to a pH comprised between 9 and 10 with an aqueous solution of NaOH, heated to 70°—80°C under stirring and made to slowly drip into water acidifed with $H_2SO_4$ (pH = 1) maintained at 70°—80°C under vigorous stirring: there precipitates a finely subdivided white product. The whole is then allowed to cool down, still under stirring, it is neutralized with an aqueous solution of $NaHCO_3$, filtered, dried, ground, repeatedly washed with water and then again dried.

B) 1 mol of phenyl-guanamine and 2 mols of ethylene-urea are dissolved, at 80°—90°C and under stirring, in an aqueous solution of formaldehyde at 37% by weight/volume (4 moles). The solution thus obtained is maintained at 80°—90°C until the precipitation of the pre-condensation product begins. Thereupon, by decanting, the excess of liquid is separated, the reaction product is dried for 4 hours at 170°—180°C, ground, washed with water and again dried.

C) 1 part by weight of ethylene-urea and 2 parts of "Lamelite C" are dry-mixed together in a conventional powder mixer, and the obtained mixture is kept in an oven, in the absence of air and in a slight current of nitrogen for 2 hours at 160°C: a condensation product is formed, with elimination of water and formaldehyde, which is ground to the desired fineness.

The compositions according to this invention can be obtained according to known methods: for instance, by mixing together the polyolefin and the anti-flame additives in a blade mixer of the Banbury type at the plastification temperature of the polyolefine.

The blend obtained is then extruded in a DOLCI-type extruder (screw diameter = 20 mm; length/diameter ratio of the screw equal to 23; screw speed = 20 rpm) at the temperature most suited for obtaining a granular product.

For an evaluation of the self-extinguising properties of the polyolefine compositions, object of this invention, in general it is proceeded in the following way:
with the granular product thin plates of 3 mm thickness are pressure formed on a small CARVER-type press, operating for 7 minutes at a pressure of $40.10^5$ Pa and at a suitable temperature.

On the plates thus prepared the level of the self-extinguishing properties either is determined — by measuring (according to ASTM D—2863 standard) the "Oxygen Index" which expresses the minimum percentage of $O_2$ in a $O_2/N_2$ mixture necessary for the sample to burn in a continuous way, or by applying the UL—94 rules (edited by the "Underwriters Laboratories" — USA) which supply an

evaluation of the degree of self-extinguishing capacity of plastic materials.

The UL—94 rules foresee various testing conditions that are more or less severe and allow to classify the sample at different self-extinguishing capacity levels.

In the tests reported on the table, there has been adopted the "Vertical Burning Test" which allows to classify the materials at decreasing levels: 94 V—0, 94 V—1, 94 V—2.

Each test is carried out on a set of 5 test pieces which may have a thickness of 6.35 mm, 3.18 mm or 4.23 mm.

The test piece, maintained in a vertical position by a suitable support, is primed with a flame at its lower end and there are carried out two ignition trials, each of a duration of 10 seconds.

The three levels of self-extinguishing capacity mentioned above may briefly be defined as follows:

94 V—0 No test piece burns for more than 10 seconds or drops burning particles after each application of the flame. Moreover, the total combustion time does not exceed 50 seconds in the 10 trials undertaken on the set of 5 test pieces.

94 V—1 There are admitted combustion times of up to 30 sec. per each single test piece, and up to 250 seconds for the trials carried out on the set of 5 test pieces. Also at this level no test piece drops burning particles.

94 V—2 The admitted combustion times are the same as those of level 94 V—1 except that there is admitted the drop of burning particles.

On the following table there have been recorded the results of some tests carried out with polypropylene containing various anti-flame additives according to this invention.

Example 6 is a comparative example: it shows that the compositions comprising the nitrogen containing compunds of the invention show a resistance to heat and to thermo-oxidation greater than that of the compositions comprising as a nitrogen containing compound a reaction product of formaldehyde with ethylene-urea or with a similar nitrogen containing cyclic compound.

TABLE

| Components | Parts by Weight | | | | | |
|---|---|---|---|---|---|---|
| | Ex. 1 | Ex. 2 | Ex. 3 | Ex. 4 | Ex. 5 | Ex. 6 |
| Polypropylene | 74 | 74 | 74 | 74 | 74 | 74 |
| Ammonium polyphosphate | 17 | 17 | 17 | 17 | 17 | 17 |
| Benzyl-guanamine | 8 | – | – | – | – | – |
| Benzyl-guanamine / $CH_2O$ | – | 8 | – | – | – | – |
| Phenyl-guanamine / $CH_2O$ | – | – | 8 | – | – | – |
| Ethylene-urea / phenyl-guanamine / $CH_2O$ | – | – | – | 8 | – | – |
| Lamelite C / ethylene-urea | – | – | – | – | 8 | – |
| Ethylene-urea / $CH_2O$ (for comparison) | – | – | – | – | – | 8 |
| Irganox 1010® (1) | 0,5 | 0,5 | 0,5 | 0,5 | 0,5 | 0,5 |
| TPL (1) | 0,5 | 0,5 | 0,5 | 0,5 | 0,5 | 0,5 |
| Oxygen Index | 29,5 | 32 | 28 | 30 | 31 | 31 |
| UL–94 (1/8) | V–0 | V–0 | V–0 | V–0 | V–0 | V–0 |
| Pressure forming on a disc press for 5 minutes | | | | | | |
| at 200 °C | 0 | 0 | 0 | 0 | 0 | + |
| at 220 °C | 0 | 0 | + | + | + | +++ |
| at 240 °C | + | + | ++ | ++ | ++ | ++++ |
| at 260 °C | ++ | ++ | ++ | +++ | ++++ | +++++ |

TABLE (Continued)

| | Ex. 1 | Ex. 2 | Ex. 3 | Ex. 4 | Ex. 5 | Ex. 6 |
|---|---|---|---|---|---|---|
| Ageing of the test pieces during exposure in an oven at 150°C with forced air circulation | | | | | | |
| After 2 days | + | + | + | + | + | ++ |
| ,, 6 ,, | + | + | ++ | ++ | +++ | +++++ |
| ,, 10 ,, | ++ | ++ | +++ | +++ | ++++ | ↓ |
| ,, 14 ,, | ++ | ++ | +++ | ++++ | +++++ | ↓ |
| ,, 21 ,, | +++ | +++ | ++++ | +++++ | ↓ | ↓ |
| ,, 28 ,, | ++++ | ++++ | +++++ | ↓ | ↓ | * |
| ,, 35 ,, | +++++ | +++++ | ↓ | ↓ | * | |
| ,, 42 ,, | ↓ | ↓ | ↓ | * | | |
| ,, 49 ,, | ↓ | ↓ | ↓ | | | |
| ,, 56 ,, | ↓ | ↓ | * | | | |
| ,, 63 ,, | * | * | | | | |
| ,, 70 ,, | | | | | | |

0 = no color variation
+ = slight yellow color
++ = dark yellow
+++ = color tending towards brown
++++ = brown
+++++ = black
* = embrittlement of test piece

(1) Anti-oxidizer — Irganox 1010® = tetra[3-(3.5-di-t-butyl-4-hydroxyphenyl)-propionate] of pentaerythritol

TPL = dilauryl thiodipropionate

**Claims for the Contracting States: BE CH DE FR GB NL**

1. Self-extinguishing polyolefin compositions having an increased resistance to heat and to thermo-oxidation, comprising for 100 parts by weight of the composition:

(1) from 5 to 30 parts by weight of an ammonium phosphate; and

(2) from 3 to 20 parts by weight of one or more nitrogen containing compounds selected from (a) benzyl-guanamine; (b) reaction products of aldehydes with guanamines of the formula:

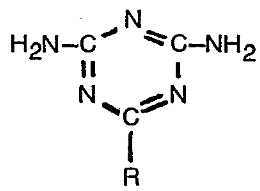

wherein R = phenyl or benzyl; (c) reaction products of aldehydes with two nitrogen containing compounds, one having the formula:

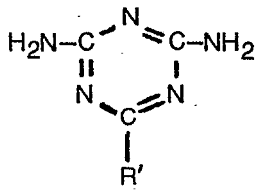

wherein R' = H, $NH_2$, phenyl or benzyl, and the other being a compound containing a functional group >NH and further the functional groups >C = O and/or >C = S, all inserted in a cyclic structure; the molar ratio of the two nitrogen containing compounds present in (c) ranging from 4:1 to 1:4.

2. Polyolefin compositions according to claim 1, in which as ammonium phosphate is used a polyphosphate of the composition $(NH_4PO_3)_n$ wherein n is greater than 50.

3. Polyolefin compositions according to claim 1, in which as nitrogen containing compound is used benzyl-guanamine.

4. Polyolefin compositions according to claim 1, in which as nitrogen containing compound is used a benzyl-guanamine/formaldehyde reaction product.

5. Polyolefin compositions according to claim 1, in which as nitrogen containing compound is used a phenyl-guanamine/formaldehyde reaction product.

6. Polyolefin compositions according to claim 1, in which as a nitrogen containing compound is used an ethyleneurea/phenyl-guanamine/formaldehyde reaction product.

7. Polyolefin compositions according to claim 1, in which as a nitrogen containing compound is used a methylol-melamine/ethylene-urea reaction product.

8. Polyolefin compositions according to claim 1, in which the polyolefin is polypropylene.

9. Process for obtaining self-extinguishing polyolefin compositions, having an increased resistance to heat and to thermo-oxidation, which consists in blending with the polyolefin for 100 parts by weight of the composition:

1) from 5 to 30 parts by weight of an ammonium phosphate, and

2) from 3 to 20 parts by weight of one or more nitrogen-containing compounds selected from (a) benzyl-guanamine; (b) reaction products of aldehydes with guanamines of the formula:

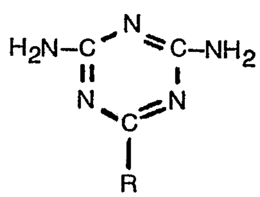

wherein R = phenyl or benzyl; (c) reaction products of aldehydes with two nitrogen containing compounds, one having the formula:

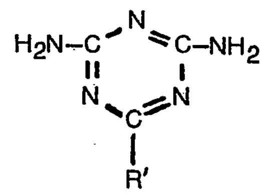

wherein R′ = H, $NH_2$, phenyl or benzyl, and the other being a compound containing a functional group >NH and further the functional groups >C = O and/or >C = S, all inserted in a cyclic structure; the molar ratio of the two nitrogen containing compounds present in (c) ranging from 4:1 to 1:4.

**Claims for the Designated State: AT**

1. Process for obtaining self-extinguishing polyolefin compositions, having an increased resistance to heat and to thermo-oxidation, which consists in blending with the polyolefin for 100 parts by weight of the composition:

1) from 5 to 30 parts by weight of an ammonium phosphate, and

2) from 3 to 20 parts by weight of one or more nitrogen-containing compounds selected from (a) benzyl-guanamine; (b) reaction products of aldehydes with guanamines of the formula:

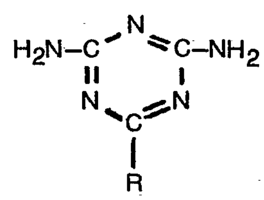

wherein R = phenyl or benzyl; (c) reaction products of aldehydes with two nitrogen containing compounds, one having the formula:

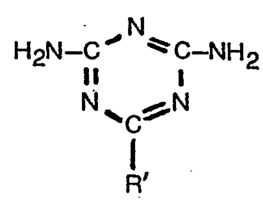

wherein R′ = H, $NH_2$, phenyl or benzyl, and the other being a compound containing a functional group >NH and further the functional groups >C = O and/or >C = S, all inserted in a cyclic structure; the molar ratio of the two nitrogen containing compounds present in (c) ranging from 4:1 to 1:4.

2. Process for obtaining polyolefin compositions according to claim 1, in which as ammonium phosphate is used a polyphosphate of the composition $(NH_4PO_3)_n$, wherein n is greater than 50.

3. Process for obtaining polyolefin compositions according to claim 1, in which as nitrogen containing compound is used benzyl-guanamine.

4. Process for obtaining polyolefin compositions according to claim 1, in which as nitrogen containing compound is used a benzyl-guanamine/formaldehyde reaction product.

5. Process for obtaining polyolefin compositions according to claim 1, in which as nitrogen containing compound is used a phenyl-guanamine/formaldehyde reaction product.

6. Process for obtaining polyolefin compositions according to claim 1, in which as a nitrogen containing compound is used an ethylene-urea/phenyl-guanamine/formaldehyde reaction product.

7. Process for obtaining polyolefin compositions according to claim 1, in which as a nitrogen containing compound is used a methylol-melamine/ethylene-urea reaction product.

8. Process for obtaining polyolefin compositions according to claim 1, in which the polyolefin is polypropylene.

**Patentansprüche für die Vertragsstaaten: BE CH DE FR GB NL**

1. Selbsterlöschende Polyolefinzusammensetzungen mit erhöhter Beständigkeit gegenüber Wärme und Thermo-Oxidation, umfasend je 100 Gew.-Teile der Zusammensetzung:

(1) 5 bis 30 Gew.-Teile eines Ammoniumphosphates; und

(2) 3 bis 20 Gew.-Teile einer oder mehrerer Stickstoff enthaltender Verbindungen, ausgewählt unter

(a) Benzylguanamin;
(b) den Reaktionsprodukten von Aldehyden mit Guanaminen der Formel

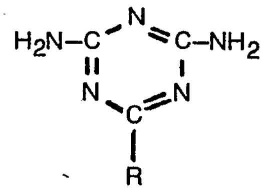

worin R Phenyl oder Benzyl ist,

(c) Reaktionsprodukt von Aldehyden mit zwei Stickstoff enthaltenden Verbindungen, von denen eine die Formel

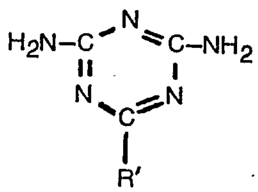

bestizt, worin R' ein Wasserstoffatom, die Aminogruppe, Phenyl oder Benzyl bedeutet und die andere eine Verbindung ist, die eine funktionelle Gruppe >NH und weiterhin die funktionellen Gruppen >C = O und/oder >C = S enthält, von denen alle in eine cyclische Struktur eingebaut sind; wobei das Molverhältnis der beiden Stickstoff enthaltenden Verbindungen in (c) im Bereich von 4:1 bis 1:4 liegt.

2. Polyolefinzusammensetzungen gemäß Anspruch 1, worin als Ammoniumphosphat ein Polyphosphat der Zusammensetzung $(NH_4PO_3)_n$ verwendet wird, worin n größer als 50 ist.

3. Polyolefinzusammensetzungen gemäß Anspruch 1, worin als Stickstoff enthaltende Verbindung Benzylguanamin verwendet wird.

4. Polyolefinzusammensetzungen gemäß Anspruch 1, worin als Stickstoff enthaltende Verbindung ein Reaktionsprodukt von Benzylguanamin und Formaldehyd verwendet wird.

5. Polyolefinzusammensetzungen gemäß Anspruch 1, worin als Stickstoff enthaltende Verbindung ein Reaktionsprodukt von Phenylguanamin und Formaldehyd verwendet wird.

6. Polyolefinzusammensetzungen gemäß Anspruch 1, worin als Stickstoff enthaltende Verbindung ein Reaktionsprodukt von Äthylenharnstoff, Phenylguanamin und Formaldehyd verwendet wird.

7. Polyolefinzusammensetzungen gemäß Anspruch 1, worin als Stickstoff enthaltende Verbindung ein Reaktionsprodukt von Methylolmelamin und Äthylenharnstoff verwendet wird.

8. Polyolefinzusammensetzungen gemäß Anspruch 1, worin das Polyolefin Polypropylen ist.

9. Verfahren zur Herstellung von selbsterlöschenden Polyolefinzusammensetzungen mit erhöhter Beständigkeit gegenüber Wärme und Thermo-Oxidation, dadurch gekennzeichnet, daß man mit dem Polyolefin je 100 Gew.-Teile der Zusammensetzung mischt:

(1) 5 bis 30 Gew.-Teile eines Ammoniumphosphats und
(2) 3 bis 20 Gew.-Teile einer oder mehrerer Stickstoff enthaltender Verbindungen, ausgewählt unter
(a) Benzylguanamin,
(b) Reaktionsprodukten von Aldehyden mit Guanaminen der Formel

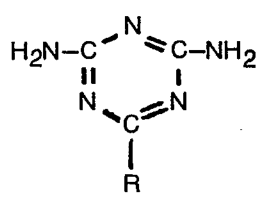

worin R Phenyl oder Benzyl bedeutet,

(c) Reaktionsprodukten von Aldehyden mit zwei Stickstoff enthaltenden Verbindungen, von denen eine die Formel

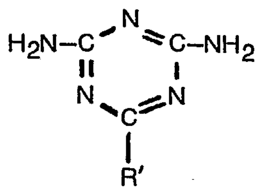

aufweist, worin R′ Wasserstoff, eine $NH_2$-Gruppe, Phenyl oder Benzyl bedeutet und die andere eine Verbindung ist, die eine funktionelle Gruppe >NH und weiterhin die funktionellen Gruppen >C=O und/oder >C=S aufweist, von denen alle in eine cyclische Struktur eingebaut sind, wobei das Molverhältnis der beiden Stickstoff enthaltenden Verbindungen in (c) im Bereich von 4:1 bis 1:4 liegt.

**Patentansprüche für den Vertragsstaat: AT**

1. Verfahren zur Herstellung von selbsterlöschenden Polyolefinzusammensetzungen mit erhöhter Beständigkeit gegenüber Wärme und Thermo-Oxidation, dadurch gekennzeichnet, daß man mit dem Polyolefin je 100 Gew.-Teile der Zusammensetzung mischt,

(1) 5 bis 30 Gewichtsteile eines Ammoniumphosphats und

(2) 3 bis 20 Gewichtsteile ein oder mehrerer Stickstoff enthaltender Verbindungen, ausgewält unter

(a) Benzylguanamin,

(b) Reaktionsprodukten von Aldehyden mit Guanaminen der Formel

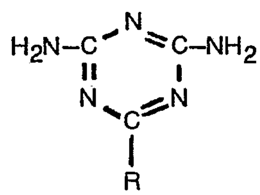

worin R Phenyl oder Benzyl bedeutet,

(c) Reaktionsprodukten von Aldehyden mit zwei Stickstoff enthaltenden Verbindungen, von denen eine die Formel

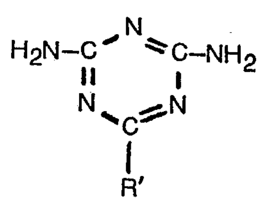

worin R′ Wasserstoff, die $NH_2$-Gruppe, Phenyl oder Benzyl bedeutet und die andere eine Verbindung ist, die eine funktionelle Gruppe >NH und weiterhin die funktionellen Gruppen >C=O und/oder >C=S aufweist, von denen alle in eine cyclische Struktur eingebaut sind, wobei das Molverhältnis der beiden Stickstoff enthaltenden Verbindungen in (c) im Bereich von 4:1 bis 1:4 liegt.

2. Verfahren zur Herstellung von Polyolefinzusammensetzungen gemäß Anspruch 1, dadurch gekennzeichnet, daß als Ammoniumphosphat ein Polyphosphat der Zusammensetzung $(NH_4PO_3)_n$ verwendet wird, worin n größer als 50 ist.

3 Verfahren zur Herstellung von Polyolefinzusammensetzungen gemäß Anspruch 1, dadurch gekennzeichnet, daß als Stickstoff enthaltende Verbindung Benzylguanamin verwendet wird.

4. Verfahren zur Herstellung von Polyolefinzusammensetzungen gemäß Anspruch 1, dadurch gekennzeichnet, daß als Stickstoff enthaltende Verbindung ein Reaktionsprodukt von Benzylguanamin und Formaldehyd verwendet wird.

5. Verfahren zur Herstellung von Polyolefinzusammensetzungen gemäß Anspruch 1, dadurch gekennzeichnet, daß als Stickstoff enthaltende Verbindung ein Reaktionsprodukt von Phenylguanamin und Formaldehyd verwendet wird.

6. Verfahren zur Herstellung von Polyolefinzusammensetzungen gemäß Anspruch 1, dadurch gekennzeichnet, daß als Stickstoff enthaltende Verbindung ein Reaktionsprodukt von Äthylenharnstoff, Phenylguanamin und Formaldehyd verwendet wird.

7. Verfahren zur Herstellung von Polyolefinzusammensetzungen gemäß Anspruch 1, dadurch gekennzeichnet, daß als Stickstoff enthaltende Verbindung ein Reaktionsprodukt von Methylolmelamin und Äthylenharnstoff verwendet wird.

8. Verfahren zur Herstellung von Polyolefinzusammensetzungen gemäß Anspruch 1, dadurch gekennzeichnet, daß das Polyolefin Polypropylen ist.

**Revendications pour les Etats contractants: BE CH DE FR GB NL**

1. Compositions polyoléfiniques auto-extinctrices présentant une résistance accrue à l'oxydation thermique et à la chaleur, comprenant pour 100 parties en poids de ladite composition:

1. de 5 à 30 parties en poids de phosphate d'ammonium; et,

2. de 3 à 20 parties de un ou plusieurs composés contenant de l'azote choisis parmi:

a) benzyl-guanamine;

b) les produits de la réaction d'aldéhydes avec des guanamines de formule:

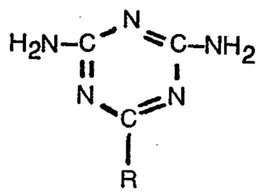

dans laquelle: R est un radical phényle ou benzyle;

c) les produits de la réaction d'aldéhydes avec deux composés contenant de l'azote, l'un présentant la formule:

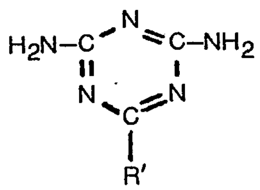

dans laquelle: R' est un atome d'hydrogène ou un radical $NH_2$, phényle ou benzyle, l'autre étant un composé contenant un groupe fonctionnel >NH et en outre les groupes fonctionnels >C=O et/ou >C=S, tous étant insérés dans une structure cyclique; le rapport molaire des deux composés contenant de l'azote présents en c) étant compris entre 4/1 et 1/4.

2. Compositions polyoléfiniques selon la revendication 1, dans laquelle en tant que phosphate d'ammonium est employé un polyphosphate ayant la composition $(NH_4PO_3)_n$ dans laquelle n est supérieur à 50.

3. Compositions polyoléfiniques selon la revendication 1, dans laquelle en tant que composé contenant de l'azote est employé la benzyl-guanamine.

4. Compositions polyoléfiniques selon la revendication 1, dans laquelle en tant que composé contenant de l'azote est utilisé le produit de la réaction entre benzyl-guanamine et formaldéhyde.

5. Compositions polyoléfiniques selon la revendication 1, dans laquelle en tant que composé contenant de l'azote est employé le produit de la réaction entre phényl-guanamine et formaldéhyde.

6. Compositions polyoléfiniques selon la revendication 1, dans laquelle en tant que composé contenant de l'azote est utilisé le produit de la réaction entre éthylène-urée, phényl-guanamine et formaldéhyde.

7. Compositions polyoléfiniques selon la revendication 1, dans laquelle entant que composé contenant de l'azote est employé le produit de la réaction de méthylol-mélamine et d'éthylène-urée.

8. Compositions polyoléfiniques selon la revendication 1, dans laquelle la polyoléfine est du polypropylène.

9. Procédé pour l'obtention de compositions polyoléfiniques auto-extinctrices présentant une résistance accrue à l'oxydation thermique et à la chaleur, que consiste à mélanger avec les polyoléfines pour 100 parties en poids de la composition:

1. de 5 à 30 parties en poids de phosphate d'ammonium; et,

2. de 3 à 20 parties en poids d'un ou plusieurs composés contenant de l'azote choisis parmi:

a) benzyl-guanamine;

b) les produits de réaction d'aldéhydes avec des guanamines de formule:

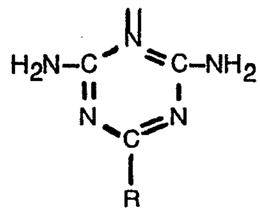

dans laquelle: R est un radical phènyle ou benzyle;

c) les produits de réaction d'aldéhydes avec deux composés contenant de l'azote, l'un de deux présentant la formule:

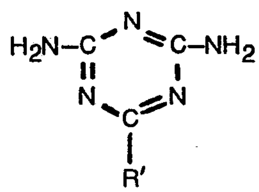

dans laquelle: R' est égal à un atome d'hydrogène ou un groupe $NH_2$, phényle ou benzyle, l'autre étant un composé contenant un groupe fonctionnel >NH et en outre les groupes fonctionnels >C=O et/ou >C=S, tous insérés dans une structure cyclique, le rapport molaire des deux composés contenant de l'azote présents en c) étant compris entre 4/1 et 1/4.

**Revendications pour l'Etat contractant: AT**

1. Procédé pour l'obtention de compositions polyoléfinique auto-extinctrices présentant une résistance accure à l'oxydation thermique et à la chaleur, qui consiste à mélanger avec les polyoléfines pour 100 parties en poids de la composition:

1. de 5 à 30 parties en poids de phosphate d'ammonium; et,

2. de 3 à 20 parties de un ou plusieurs composés contenant de l'azote choisis parmi:

a) benzyl-guanamine;

b) les produits de la réaction d'aldéhydes avec des guanamines de formule:

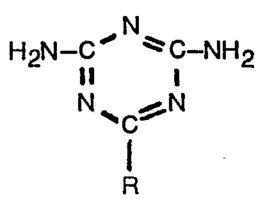

dans laquelle: R est en radical phényle ou benzyle;

c) les produits de la réaction d'aldéhydes avec deux composés contenant de l'azote, l'un présentant la formule:

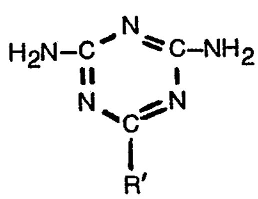

dans laquelle: R' est un atome d'hydrogène ou un radical $NH_2$, phényle ou benzyle, l'autre étant un composé contenant un groupe fonctionnel >NH et en outre les groupes fonctionnels >C=O et/ou >C=S, tous étant insérés dans une structure cyclique; le rapport molaire des deux composés contenant de l'azote présents en c) étant compris entre 4/1 et 1/4.

2. Procédé selon la revendication 1, dans lequel en tant que phosphate d'ammonium est employé un polyphosphate ayant la composition $(NH_4PO_3)_n$ dans laquelle n est supérieur à 50.

3. Procédé selon la revendication 1, dans lequel en tant que composé contenant de l'azote est employé la benzylguanamine.

4. Procédé selon la revendication 1, dans lequel en tant que composé contenant de l'azote est utilisé le produit de la réaction entre benzylguanamine et formaldéhyde.

5. Procédé selon la revendication 1, dans lequel en tant que composé contenant de l'azote est employé le produit de la réaction entre phényl-guanamine et formaldéhyde.

6. Procédé selon la revendication 1, dans lequel en tant que composé contenant de l'azote est utilisé le produit de la réaction entre éthylène-urée phényl-guanamine et formaldéhyde.

7. Procédé selon la revendication 1, dans lequel en tant que composé contenant de l'azote est employé le produit de la réaction de méthylol-mélamine et d'éthylène-urée.

8. Procédé selon la revendication 1, dans lequel la polyoléfine est du polypropylène.